# Europäisches Patentamt

# European Patent Office

# Office européen des brevets

(11) Veröffentlichungsnummer: **0 335 223**
**B1**

(12) # EUROPÄISCHE PATENTSCHRIFT

(45) Veröffentlichungstag der Patentschrift:
29.08.90

(21) Anmeldenummer: 89104994.2

(22) Anmeldetag: 21.03.89

(51) Int. Cl.⁵: **E03F 3/06**

(54) Anschlussstück zum Verbinden einer nicht begehbaren Kanalrohrleitung mit einer Zulaufleitung.

(30) Priorität: 26.03.88 DE 3810437

(43) Veröffentlichungstag der Anmeldung:
04.10.89 Patentblatt 89/40

(45) Bekanntmachung des Hinweises auf die Patenterteilung:
29.08.90 Patentblatt 90/35

(84) Benannte Vertragsstaaten:
AT BE CH DE FR GB IT LI LU NL SE

(56) Entgegenhaltungen:
WO-A-86/05569
DE-A- 2 440 086
DE-A- 3 618 963

(73) Patentinhaber: **HERMANN HEMSCHEIDT MASCHINENFABRIK GMBH & CO.,**
**Bornberg 97-103 Postfach 100269,**
**D-5600 Wuppertal 1(DE)**

(72) Erfinder: Behnert, Holger, Schwartnerstrasse 1c,
D-5600 Wuppertal 2(DE)
Erfinder: Dannehl, Friedrich-Wilhelm, Burgweg 34,
D-5800 Hagen 5(DE)
Erfinder: Peschel, Walter, Kruppstrasse 222,
D-5600 Wuppertal 1(DE)

ACTORUM AG

## Beschreibung

Die Erfindung betrifft ein Anschlußstück zum Verbinden eines Inliners einer nicht begehbaren Kanalrohrleitung mit einer Zulaufleitung gemäß dem Oberbegriff des Patentanspruches 1.

Aus der EP-OS 0 110 664 sind Anschlußrohre eines aus Kurzrohren zusammengesetzten Inliners mit vorbereiteten Anschlußöffnungen für den Anschluß der Zulaufleitungen bekannt. Die Kurzrohre werden einzeln mit einer Transportvorrichtung, an der beidseitig ein Zugseil angeschlagen ist, von einem Revisionsschacht aus in die Kanalrohrleitung eingezogen und an den bereits im Kanal verlegten Rohrstrang angeschlossen. Die seitlich in die Kanalrohrleitung einmündenden Zulaufleitungen werden mit einer Fernsehkamera hinsichtlich ihrer Lage und Größe genau eingemessen. Nach diesen Abmessungen wird außerhalb des Kanals eine genau passende Anschlußöffnung in das Anschlußrohr eingeschnitten. An der Anschlußstelle wird das eingezogene Anschlußrohr in radialer Richtung auf die Mündung der Zulaufleitung ausgerichtet. Mit einer Einbauvorrichtung wird dann eine dehnbare Absperrblase zur Anschlußstelle gebracht und durch Aufblasen in die Zulaufleitung eingeführt. Anschließend wird der Ringraum zwischen dem Anschlußrohr und dem Kanalrohr mit einem Dämmer verpreßt. Dabei dichtet die Absperrblase den Spalt zwischen dem Anschlußrohr und der Zulaufleitung ab und verhindert das Austreten des Dämmers. Nach dem Aushärten wird die Absperrblase wieder entfernt, so daß der Übergangsbereich zwischen der Zulaufleitung und dem Inliner lediglich von dem eingepreßten Material verfüllt ist.

Dieses Verfahren ist jedoch sehr zeit- und arbeitsaufwendig. Das Einmessen der Einmündung und die Übertragung der Meßwerte auf die danach herzustellende Anschlußöffnung verlangt eine sehr sorgfältige Ausführung. Anderenfalls wird der Ringspalt zwischen Anschlußrohr und Zulaufleitung nicht abgedichtet.

Aus der DE-OS 3 618 963 ist es bekannt, die Verbindung des Inliners in einem Abwasserkanal mit der Einmündung einer Zulaufleitung mit einer aushärtbaren Spachtelmasse abzudichten. Ein Anschlußrohr mit einer passend eingeschnittenen Anschlußöffnung wird in dem Kanal zunächst genau auf die Mündung der Zulaufleitung ausgerichtet. Danach wird ein auf der Außenseite mit einer Spachtelmasse beschichteter, aufweitbarer Balg auf einer der Rohrkrümmung des Inliners angepaßten, schildförmigen Halterung mit einem Gestell in das Inlinerrohr eingezogen. Der Balg wird ebenfalls auf die Anschlußöffnung ausgerichtet und anschließend in die Mündung der Zulaufleitung eingeführt. Mit einem von außen zugeführten Druckmittel wird der Balg aufgeweitet. Dabei wird die Spachtelmasse von dem Balg an die Wandung der Zulaufleitung sowie an die Randteile der Anschlußöffnung angedrückt, um den Spalt zwischen dem Inlinerrohr und der Zulaufleitung zu überbrücken. Diese Abdichtung ist ebenfalls schwierig herzustellen, weil die Anschlußöffnung im Inliner und der einzuführende Balg genau auf die Zulaufleitung auszurichten sind, denn bei ungenauer Ausrichtung wird die aufgetragene Spachtelmasse an den Kanten der Anschlußöffnung abgestreift und nicht in den Spalt gedrückt. Durch einen nicht ausgefüllten Spalt kann nämlich der Dämmer beim anschließenden Verpressvorgang wieder austreten. Durch eine undichte Verbindung kann in der Folge laufend Grundwasser in den Abwasserkanal eindringen und die angeschlossene Kläranlage zusätzlich belasten. Umgekehrt kann auch Abwasser ins Grundwasser gelangen.

Der vorliegenden Erfindung liegt die Aufgabe zugrunde, eine dauerhafte und einfach herzustellende Verbindung und Abdichtung zwischen einer Zulaufleitung und einer Kanalrohrleitung zu schaffen.

Diese Aufgabe wird mit den im Kennzeichen des Patentanspruches angegebenen Mitteln gelöst. Die vorteilhafte Ausgestaltung der Erfindung ist Gegenstand der Unteransprüche.

Die Erfindung verwendet ein Anschlußstück mit einer vorgefertigten Anschlußöffnung, an deren Rand ein dehnbares Faservlies befestigt ist, das die Anschlußöffnung überdeckt. Das Faservlies ist in der Mitte eingeschnitten und mit einem aushärtbaren Harz getränkt. An der Anschlußstelle wird das Faservlies von dem Dehnkörper aufgenommen und durch die Einleitung eines Druckmittels aus der Anschlußöffnung heraus in die Zulaufleitung hineingedrückt. Das eingeschnittene Faservlies dehnt und legt sich dabei an die jeweiligen Konturen im Übergangsbereich an und schließt den Spalt zwischen der Anschlußöffnung im Anschlußstück und der Zulaufleitung in der Kanalrohrleitung dicht ab. Auf diese Weise entsteht nach dem Aushärten des Harzes eine dauerhafte, dichte Verbindung zwischen der Zulaufleitung und dem Inliner bzw. der Kanalrohrleitung, die unabhängig von dem später einzubringenden Dämmer gebildet wird. Zur Herstellung der Verbindung wird der Querschnitt der Zulaufleitung nur kurzfristig von dem Dehnkörper versperrt, bis das Harz am getränkten Faservlies ausgehärtet ist. Die Topfzeit kann zudem mit Hilfe einer Heizung auf wenige Minuten verkürzt werden. Der Ablauf des Abwassers aus der Zulaufleitung in die Kanalrohrleitung wird daher zur Herstellung der Verbindung nur kurz unterbrochen. Weitere Sanierungsarbeiten werden durch die fortdauernde Entwässerung ebenfalls nicht in nennenswerter Weise behindert.

In vorteilhafter Weiterbildung der Erfindung weist die Anschlußöffnung einen wesentlich größeren Querschnitt als die Zulaufleitung auf. Das Anschlußrohr muß folglich nicht genau mit der Anschlußöffnung auf die Einmündung ausgerichtet werden, weil mit dem Faservlies der gesamte Bereich der Anschlußöffnung abgedeckt und abgedichtet wird. Der große, in Längsrichtung der Rohrachse ellipsenförmig verlaufende Öffnungsquerschnitt deckt auch sehr unterschiedliche Einlaufquerschnitte von schräg einmündenden Zulaufleitungen ab, die andernfalls nur schwierig abzudecken sind. Es können Anschlußrohre mit einheitlich vorgefertigten Anschlußöffnungen verwendet werden.

Die Erfindung wird nachfolgend anhand eines in der Zeichnung dargestellten Ausführungsbeispiels näher erläutert. Es zeigen

Fig. 1: die Anschlußstelle einer Zuleitung mit dem Inliner einer Kanalrohrleitung im Längsschnitt,

Fig. 2: die Anschlußstelle im Querschnitt entsprechend der Schnittlinie von Fig. 1 in vergrößertem Maßstab,

Fig. 3: ein als Hutmanschette ausgebildetes Anschlußstück in zwei Ansichten.

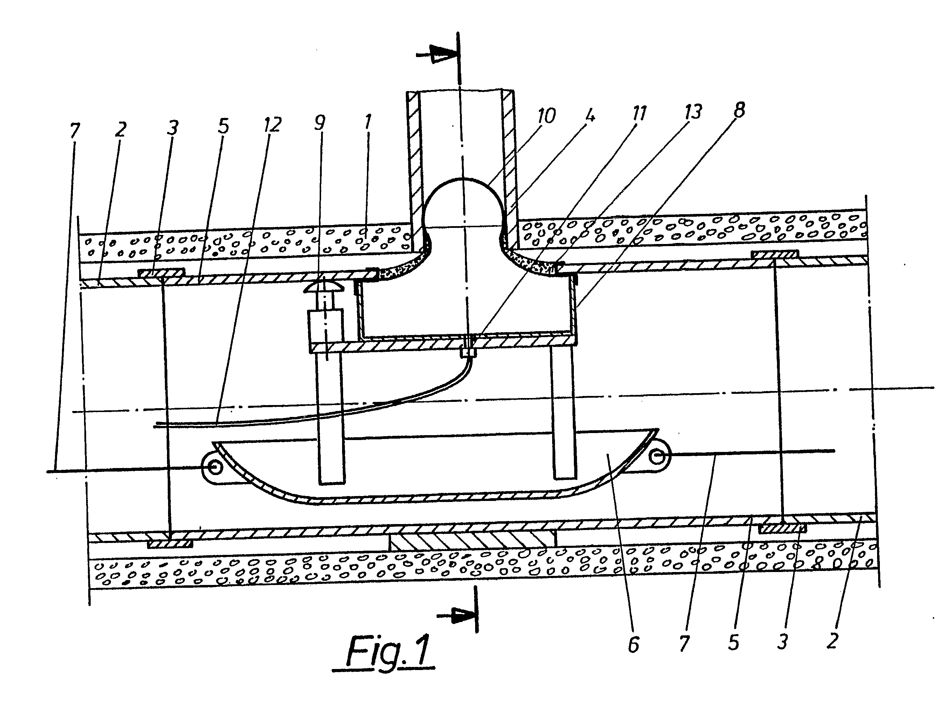

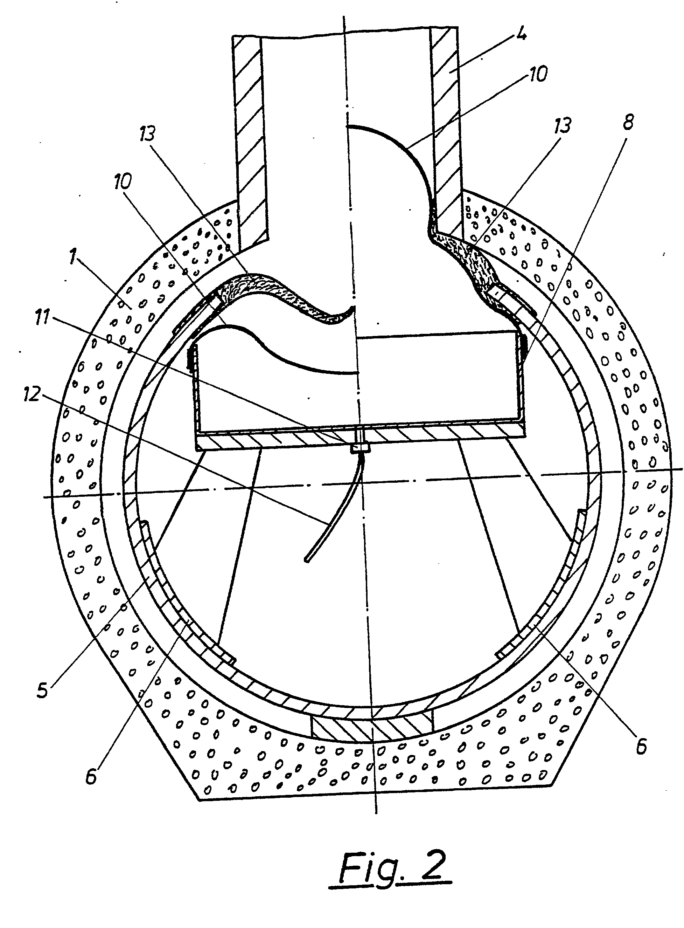

Eine im Erdreich verlegte, nicht begehbare Kanalrohrleitung 1 wird mit einem aus Kurzrohren 2 zusammengesetzten Inliner ausgerüstet. Die Kurzrohre 2 werden mit einer nicht dargestellten Seilzugvorrichtung von einem ebenfalls nicht dargestellten Revisionsschacht aus in die Kanalrohrleitung 1 eingezogen und mit Hilfe von Muffenverbindungen 3 zu einem Rohrstrang zusammengefügt. In die Kanalrohrleitung 1 münden in Abständen Abwasser führende Zulaufleitungen 4 mit sehr unterschiedlichen Einlaufwinkeln zur Rohrachse ein. Das erfindungsgemäße Anschlußstück schafft die Verbindung des Inliners der Kanalrohrleitung 1 mit den Zulaufleitungen 4. Im Ausführungsbeispiel nach Fig. 1 und 2 ist das Anschlußstück als Anschlußrohr 5 ausgebildet, das eine vorgefertigte, jedoch nicht bezeichnete Anschlußöffnung aufweist.

Die Verbindung des Anschlußrohres 5 mit der Zulaufleitung 4 wird mit Hilfe einer Einbauvorrichtung (Bezugszeichen 6 bis 11) hergestellt, deren auf den Innenwandungen aufliegende Gleitkufen mit 6 bezeichnet sind. An den Gleitkufen 6 sind beidseitig die Enden eines durch die Kanalrohrleitung 1 hindurchgeführten Zugseils 7 der Seilzugvorrichtung angeschlagen. Auf den Gleitkufen 6 sind über Verstrebungen ein zylinderförmiger Druckbehälter 8 und ein Feststellzylinder 9 abgestützt. Der Druckbehälter 8 ist an der oberen, zur Kanalwandung gerichteten Stirnseite durch eine dehnbare Membran 10 aus einen hochelastischem Material druckdicht verschlossen. Im Ausführungsbeispiel ist also der genannte Dehnkörper aus dem Druckbehälter 8 und der Membran 10 zusammengesetzt. An dem Druckbehälter 8 ist mit einem entsperrbaren Rückschlagventil 11 eine Druckmittelleitung 12 angeschlossen, durch die beispielsweise Druckluft zugeführt werden kann. Die Stellung der Einbauvorrichtung 6 bis 11 zur Anschlußöffnung und Zulaufleitung 4 wird mit Hilfe einer nicht dargestellten Fernsehkamera kontrolliert.

Die vorgefertigte Anschlußöffnung im Anschlußrohr 5 ist mit einem ellipsenförmigen, sich in Längsrichtung der Rohrachse erstreckenden Querschnitt wesentlich größer ausgebildet als die Mündung der Zulaufleitung 4. Die Anschlußöffnung wird durch ein im Randbereich der Öffnung beidseitig anlaminiertes, dehnbares Faservlies 13 überdeckt. Vor dem Einziehen des Anschlußrohres 5 in die Kanalrohrleitung 1 wird das Faservlies 13 von der Mitte her eingeschnitten und mit einem aushärtbaren Harz, vorzugsweise einem Epoxyd-Harz getränkt. Nach dem Einziehen des Anschlußrohres 5 in die Kanalrohrleitung 1 befindet sich die ausgerichtete Einbauvorrichtung 6 bis 11 mit dem Faservlies 13 in der in Fig. 2 links dargestellten Position. Das Druckmittel wird dann über die an das Rückschlagventil 11 angeschlossene Druckmittelleitung 12 in

den Dehnkörper 8, 10 geleitet, wodurch die Membran 10 in Richtung der Zulaufleitung 4 ausgeweitet wird. Das eingeschnittene Faservlies 13 wird sodann von der sich ausdehnenden Membran 10 aufgenommen und an die offenen Wandungen in der Kanalrohrleitung 1 und der Zulaufleitung 4 angedrückt. Das dehnbare Material vom Faservlies 13 paßt sich dabei an die jeweiligen Konturen im Übergangsbereich genau an. Das Faservlies 13 schließt dann - wie in der rechten Zeichnungshälfte von Fig. 2 dargestellt den Spalt zwischen der Anschlußöffnung im Anschlußrohr 5 und der Zulaufleitung 4 dicht ab. Die Aushärtung des Harzes im Faservlies 13 kann mittels einer nicht dargestellten Heizung im Druckbehälter 8, die das eingeleitete Druckmittel erwärmt, wesentlich beschleunigt werden.

Nach dem Aushärtevorgang des Harzes bildet das Faservlies 13 eine glatte und feste Verbindung zwischen dem Anschlußrohr 5 und der Zulaufleitung 4. Mit dem Ablassen des Druckmittels durch das entsperrbare Rückschlagventil 11 löst sich die Membran 10 von dem ausgehärtenen Faservlies 13 ab, wobei der Ablösevorgang ggf. durch eine auf die Membranoberfläche aufgebrachte dünne Trennfolie erleichtert werden kann. Anschließend wird die Einbauvorrichtung 6 bis 11 zur nächsten Anschlußstelle gezogen.

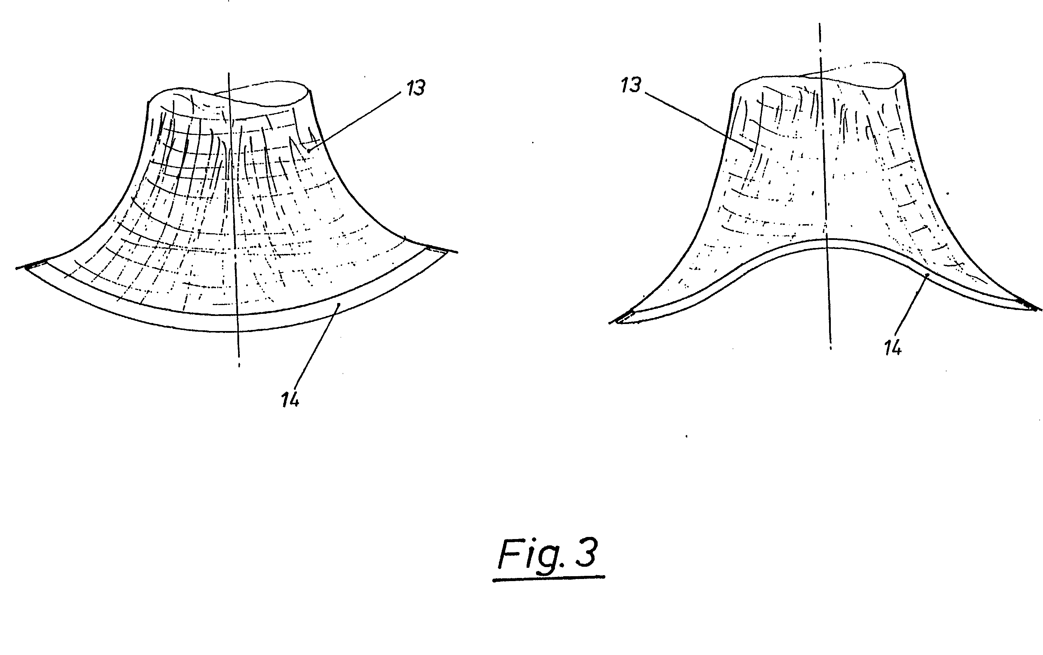

In Fig. 3 ist das Faservlies 13 an einem Stützring 14 befestigt und als Hutmanschette ausgeformt. Der Stützring besitzt ebenfalls einen größeren Öffnungsquerschnitt als die Zulaufleitung und ist in seiner Kontur der Kanalrohrleitung weitgehend angepaßt. Ein solches Anschlußstück ist insbesondere zur nachträglichen Abdichtung einer in die Kanalrohrleitung 1 einmündenden Zulaufleitung 4 geeignet. Es wird mit der Einbauvorrichtung 6 bis 11 zur Anschlußstelle herangeführt und in der Weise eingebracht, daß der Stützring 14 unmittelbar an der Innenwandung der Kanalrohrleitung 1 anliegt und den Randbereich um die Zulaufleitung 4 abdeckt. Das als Hutmanschette ausgeformte, geöffnete Faservlies 13 wird wiederum mit dem Dehnkörper 10 in die Zulaufleitung 4 eingedrückt. Das Anschlußstück verschließt den Übergangsbereich von Anschlußöffnung und Zulaufleitung 4 in gleicher Weise wie bei einem Anschlußrohr 5 eines aus Kurzrohren zusammengesetzten Inliners.

## Patentansprüche

1. Anschlußstück zum Verbinden einer nicht begehbaren Kanalrohrleitung mit einer Zulaufleitung, wobei das Anschlußstück den Randbereich um die Zulaufleitung herum abdeckt und eine vorgefertigte Anschlußöffnung aufweist, gekennzeichnet durch folgende Merkmale:

a) ein dehnbares Faservlies (13) ist am Rand der vorgefertigten Anschlußöffnung befestigt;

b) das Faservlies (13) überdeckt die Anschlußöffnung;

c) das Faservlies (13) ist in der Mitte eingeschnitten und mit einem aushärtbaren Harz getränkt;

d) das Faservlies (13) läßt sich durch einen Dehnkörper (10) in die Zulaufleitung (4) drücken und verschließt den Übergangsbereich zwischen Anschlußöffnung und der Zulaufleitung (4) und dichtet diesen ab.

2. Anschlußstück nach Anspruch 1, dadurch gekennzeichnet, daß die Anschlußöffnung einen größeren Querschnitt als die Zulaufleitung (4) aufweist.

3. Anschlußstück nach Anspruch 1 oder 2, dadurch gekennzeichnet, daß die Anschlußöffnung in Längsrichtung der Rohrachse ellipsenförmig gestreckt ausgebildet ist.

4. Anschlußstück nach einem oder mehreren der Ansprüche 1 bis 3, dadurch gekennzeichnet, daß das Flaservlies (13) am Rand der vorgefertigten Anschlußöffnung eines Anschlußrohres (5) eines in die Kanalrohrleitung (1) eingezogenen Inliners befestigt ist.

5. Anschlußstück nach einem oder mehreren der Ansprüche 1 bis 4, dadurch gekennzeichnet, daß das Faservlies (13) am Rand der Anschlußöffnung von einem der Kontur der Kanalrohrleitung (1) weitgehend angepaßten Stützring (14) befestigt ist.

6. Anschlußstück nach einem oder mehreren der Ansprüche 1 bis 5, dadurch gekennzeichnet, daß das Faservlies (13) in Verbindung mit dem Stützring (14) als Hutmanschette ausgeformt ist.

## Claims

1. A connecting member for joining an inaccessible main to a lateral pipe, the connecting member covering the edge region around the lateral pipe and having a prefabricated connecting opening, characterised by the following features:

(a) an expansible fibrous element (13) is secured to the edge of the prefabricated connecting opening;

(b) the fibrous element (13) covers the connecting opening;

(c) the fibrous element (13) is notched in the middle and is impregnated with an age-hardening resin;

(d) the fibrous element (13) can be pressed by an expansion member (10) into the lateral pipe (4) and closes and seals the transition region between the connecting opening and the lateral pipe (4).

2. A connecting member according to claim 1, characterised in that the connecting opening has a larger cross-section than the lateral pipe (4).

3. A connecting member according to claim 1 or 2, characterised in that the connecting opening is stretched in the form of an ellipse in the longitudinal direction of the pipe axis.

4. A connecting member according to one or more of claims 1 to 3, characterised in that the fibrous element (13) is connected to the edge of the prefabricated connecting opening of a connecting pipe (5) forming part of a re-liner pulled into the main (1).

5. A connecting member according to one or more of claims 1 to 4, characterised in that the fibrous element (13) is secured to the edge of the connecting opening of a supporting ring (14) substantially matching the contour of the main (1).

6. A connecting member according to one or more of claims 1 to 5, characterised in that the fibrous element (13) in conjunction with the supporting ring (14) is given the shape of a cap-type gasket.

## Revendications

1. Pièce de raccordement pour relier à une canalisation d'amenée une canalisation principale d'égout qui n'est pas accessible, la pièce de raccordement recouvrant la région du bord autour de la canalisation d'amenée et présentant une ouverture de raccordement préfabriquée, caractérisée par les particularités suivantes:

a) une nappe de fibres extensible (13) est fixée sur le bord de l'ouverture de raccordement préfabriquée;

b) la nappe de fibres (13) recouvre l'ouverture de raccordement;

c) la nappe de fibres (13) est découpée en son centre, et elle est imprégnée d'une résine durcissable;

d) la nappe de fibres (13) peut être poussée dans la canalisation d'amenée (4) par un corps extensible (10), elle ferme la région de transition entre l'ouverture de raccordement et la canalisation d'amenée (4) et elle la rend étanche.

2. Pièce de raccordement selon la revendication 1, caractérisée par le fait que l'ouverture de raccordement présente une section supérieure à celle de la canalisation d'amenée (4).

3. Pièce de raccordement selon la revendication 1 ou 2, caractérisée par le fait que l'ouverture de raccordement est conformée de manière à s'étendre en forme d'ellipse dans la direction longitudinale de l'axe de la canalisation.

4. Pièce de raccordement selon une ou plusieurs des revendications 1 à 3, caractérisée par le fait que la nappe de fibres (13) est fixée sur le bord de l'ouverture de raccordement préfabriquée d'un tube de raccordement (5) d'un tuyau intérieur introduit dans la canalisation principale (1) de l'égout.

5. Pièce de raccordement selon une ou plusieurs des revendications 1 à 4, caractérisée par le fait que la nappe de fibres (13) est fixée sur le bord de l'ouverture de raccordement au moyen d'une couronne d'appui (41) largement adaptée au contour de la canalisation principale (1) de l'égout.

6. Pièce de raccordement selon une ou plusieurs des revendications 1 à 5, caractérisée par le fait que la nappe de fibres (13) est réalisée sous la forme d'une manchette chapeau reliée à la couronne d'appui (14).

*Fig.1*

_Fig. 2_

Fig. 3